# EUROPÄISCHE PATENTSCHRIFT

(11) **EP 2 462 004 B1**
(45) Veröffentlichungstag und Bekanntmachung des Hinweises auf die Patenterteilung: **30.03.2016**
(21) Anmeldenummer: 10745139.5
(22) Anmeldetag: 03.08.2010
(51) Int. Cl.: B60N 3/14, F23Q 7/00

(54) **STECKVORRICHTUNG NACH ART EINES ZIGARETTENANZÜNDERSTECKERS, INSBESONDERE FÜR KRAFTFAHRZEUGE**
PLUG DEVICE IN FORM OF A CIGARETTE LIGHTER PLUG, IN PARTICULAR FOR MOTOR VEHICLES
DISPOSITIF ENFICHABLE SOUS FORME D'UNE FICHE D'ALLUME-CIGARE, EN PARTICULIER POUR DES VÉHICULES AUTOMOBILES

(30) Priorität: 03.08.2009 DE 202009010499 U
(43) Veröffentlichungstag der Anmeldung: 13.06.2012
(73) Patentinhaber: Dometic Sweden AB, 171 54 Solna (SE)
(72) Erfinder: KIEWE gnt. König, Rolf, 48282 Emsdetten (DE)
(86) Internationale Anmeldenummer: PCT/EP2010/004737
(87) Internationale Veröffentlichungsnummer: WO 2011/015340

(56) Entgegenhaltungen:
- WO-A1-00/38280
- WO-A1-98/09351
- DE-A1- 19 800 129
- US-A- 5 263 879

## Beschreibung

### GEBIET DER ERFINDUNG

Die Erfindung betrifft eine Steckvorrichtung nach Art eines Zigarettenanzündersteckers insbesondere für Kraftfahrzeuge, mit den Merkmalen des Oberbegriffs des Anspruchs 1. Demnach ist ein Zigarettenanzünderstecker für Kraftfahrzeuge, also ganz allgemein eine Steckvorrichtung für den elektrischen Anschluss an eine Niedervolt-Steckdose mit einem außerhalb der Steckdose gelegenen Gehäuseteil und mit einer in eine Kontaktbuchse der Steckdose einführbaren Kontaktierhülse versehen. Ferner ist mindestens ein in einer Aussparung der Kontaktierhülse angeordnetes, mindestens eine Klemmbacke aufweisendes Klemmmittel zum Festsetzen der Steckvorrichtung nach deren Einführen in die Steckdose vorgesehen. Mindestens ein Spreizmittel dient zum nach außen Spreizen der mindestens einen Klemmbacke bezüglich der Kontaktierhülse, d.h. vorzugsweise quer zur Einführrichtung der Steckvorrichtung. Beim Verschieben des mindestens einen Spreizmittels verläuft eine Richtungskomponente des das Verschieben bewirkenden Mittels parallel zu der Einsteckrichtung der Steckvorrichtung oder des Steckers bei deren/dessen Einführen in die Steckdose. Durch das spreizbare Klemmmittel wird ein besonders sicherer Sitz der Vorrichtung in der Steckdose erzielt.

### TECHNOLOGISCHER HINTERGRUND

Derartige in der Steckdose durch gesonderte Arbeitsschnitte festsetzbare Steckvorrichtungen für Kraftfahrzeuge sind in vielfältiger Form bekannt: Aus der DE 198 00 129 C2 ist ein Zigarrenanzünder-Stecker bekannt, bei dem das Gehäuseteil, welches sich stets außerhalb der Steckdose befindet, bezüglich der Kontaktierhülse, die sich überwiegend in der Steckdose befindet, quer zur Steckrichtung schwenkbar ist. Das Gehäuse dient dabei als schwenkbare Handhabe, mit welcher ein Spreiznocken von einer der Strecklage des Steckers entsprechenden Ruheposition in eine einer Schwenklage entsprechenden Spreizposition schwenkbar ist. Dadurch spreizt der Spreiznocken, der sich notwendigerweise außerhalb der Steckdose befindet, ein federelastisches, in der Kontaktierhülse einseitig festgesetztes Klemmmittel in der Weise, dass die an dem Klemmmittel angeordneten Klemmbacken durch eine Aussparung in der Kontaktierhülse hindurch treten und sich federelastisch an die Innenwand der Kontaktbuchse der Steckdose andrücken. - Diese Lösung setzt voraus, dass nahe der zu kontaktierenden Steckdose ausreichender Schwenkraum für das Steckergehäuse vorhanden ist. Die notwendige Federelastizität des Klemmmittels und der notwendig große Abstand zwischen der Schwenkachse und den Klemmbacken (in Steckrichtung gesehen) führt dazu, das die auf diese Weise erzeugbaren Klemmkräfte relativ schwach sind.

Bei einer anderen Bauart von eigenständig klemmbaren Zigarettenanzündersteckern gemäß DE 94 14 757 U1, DE 196 36 748 A1, EP 0 907 224 A1 und US 5 569 053 A wird nach dem Einführen des Steckers in die Steckdose ein Klemmkeil in den radialen Spalt zwischen der Kontaktierhülse des Steckers und der Kontaktbuchse der Steckdose vorgeschoben. Dies erfolgt bei der e.g. DE 94 14 757 U1, von der die Erfindung ausgeht, mittels eines Schiebers, der auf der Außenseite des Gehäuseteils verschiebbar gelagert ist. Für ein derartiges Aktivieren der Klemmbacken sind in der Regel zwei Hände erforderlich, um das Vorschieben der Klemmkeile mit dem notwendigen Feingefühl zu bewerkstelligen. In jedem Fall hängt die erzeugte Klemmkraft allein von der Vorschubkraft ab, die der Benutzer beim Vorschieben der Klemmkeile aufbringt. Dabei reiben die Klemmkeile entlang der Innenoberfläche der Kontaktbuchse der Steckdose. Hierbei kann die meist sehr dünnwandige Kontaktbuchse zumindest elastisch, aber auch dauerhaft plastisch verformt werden, so dass bei späterer erneuter Benutzung der Steckverbindung in einer anderen Drehlage des Steckers die elektrischen Kontakte des Steckers mit der Kontaktbuchse nicht mehr sauber kontaktieren. Bleibt der Stecker für längere Zeit in der Steckdose und ist der Klemmkeil sehr fest in die Kontaktbuchse vorgeschoben worden, so kann das Zurückziehen der Klemmkeile und damit das Lösen der Steckverbindung problematisch sein. Oder aber es erschweren die sehr engen Platzverhältnisse in der in die Steckdose einzuschiebenden Kontaktierhülse das Einleiten und Aufbringen der gewünschten Haltekraft des Steckers in der Steckdose, wie z.B. bei der e.g. DE 196 36 748 A1. Leicht federnde Haltekräfte erhält der Stecker wenn, wie bei der e.g. EP 0 907 224 A1, die radial an der Kontaktierhülse federnd hervorstehenden elektrischen Kontakte gleichzeitig als Klemmbacken dienen, die durch das verstellbare Spreizmittel lediglich etwas stärker als durch die Federkraft nach radial außen gedrängt werden.

Die US 5,263,879 A und die WO 98/09351 A1 befassen sich damit, dieselbe Steckvorrichtung in unterschiedlich großen Zigarettenanzündersockeln bei gutem elektrischen Kontakt verwenden zu können. Für großkalibrige Steckdosen werden die elektrischen Kontaktfedern durch einen Schieber nach außen gespreizt, während für kleinkalibrige Steckdosen eine zweite Schieberstellung gewählt wird, in der der elektrische Erdungskontakt weniger weit nach radial außen durch die dafür im Steckergehäuse vorgesehenen Öffnungen herausragt.

Eine andere Bauart für Zigarettenanzünder-Stecker mit eigenständiger Klemmeinrichtung ist aus der DE 297 06 508 U1, DE 200 04 394 U1 oder WO 00/38280 A1 bekannt. In allen Fällen wird der feste Sitz des Zigarettenanzünder-Steckers in seiner Steckdose dadurch bewirkt, dass eine außen an dem Gehäuseteil des Steckers angeordnete Rändelschraube solange verdreht wird, bis ein Klemmkeil sich unter seitlichem Spreizen soweit in den Luftspalt zwischen der Kontaktbuchse der Steckdose und der Kontaktierhülse des Steckers eingeschoben hat, dass ein besonders fester Sitz des Steckers in der Steckdose erreicht wird. Diese Bauart wird verwendet, um kleinere Geräte wie Halter von Mobiltelefonen an der Steckdose festzusetzen, so dass auch bei in den Mobiltelefonhalter eingesetzten Mobiltelefon ausreichender mechanischer Halt erzielt wird. Dadurch soll das Mobiltelefon ohne eigenständige Befestigung des Telefonhalters am Fahrzeug-Armaturenbrett elektrisch wieder aufgeladen werden können. Der Zigarettenanzünderstecker dient also sowohl dem elektrischen Kontaktieren als auch der mechanischen Befestigung. Die hierbei auftretenden Hebelkräfte, die auf die Steckverbindung einwirken, sind nicht unerheblich. Allerdings können aufgrund der groß kalibrierten Gewinde der Rändelschrauben erhebliche Klemmkräfte erzeugt werden, ohne dass federelastische Rückstellkräfte eine Rolle spielen oder Vibration des Fahrzeugs zu einem sich Lösen der Klemmverbindung führen können. Deshalb werden die Klemmkräfte von den Klemmkeilen auf kürzestem Weg auf die Klemmbacken übertragen, so dass die Federelastizität beschränkt bleibt auf die federelastische Nachgiebigkeit der Kontaktbuchse der Steckdose selbst. Da derartige Gerätestecker immer in derselben Ausrichtung in die Steckdose eingeführt werden müssen um die anhängende Gerätschaft wie den Mobiltelefonhalter in einer geeigneten Gebrauchstellung zu halten, werden die Kontaktbuchsen immer an der gleichen Stelle mechanisch belastet. Wenn, wie üblich, die Minuskontaktfedern um neunzig Grad versetzt zu den Klemmbacken seitlich aus der Kontaktierhülse federnd hervorschauen, befinden sich diese also stets in demselben Umfangsbereich der Steckdose, so dass allmähliche Informationen der Kontaktbuchse der Steckdose keinen schädlichen Einfluss haben. Auch spielen die Anforderungen an die Begrenzung des Übergangswiderstandes zwischen der Steckdose und dem Stecker bei den typischen Kleinverbrauchern, die solche Geräte darstellen, keine nennenswerte Rolle.

Keines der e.g. Dokumente behandelt das Problem, die Kontaktierung für den Abgriff größerer Stromstärken zur optimieren. Weder ein Drucktaster zum Einhandbedienen der Klemmbacken noch ein Verrasten der Klemmbacken in Spreizstellung ,d.h. unter definierten Kräften, wird offenbart.

### DARSTELLUNG DER ERFINDUNG

Davon ausgehend liegt der Erfindung die Aufgabe zugrunde, einen gattungsgemäßen Zigarettenanzünderstecker so zu verbessern, dass vergleichsweise große Ströme durch ihn zu einem entsprechenden Verbraucher gefahrlos hindurchgeleitet werden können.

Zur Lösung dieser Aufgabe wird ein Zigarettenanzünderstecker mit den Merkmalen des Anspruchs 1 vorgeschlagen. Demnach ist an dem außerhalb der Steckdose Gehäuseteil des Zigarettenanzündersteckers ein Drucktaster angeordnet. Der Drucktaster verschiebt bei seinem Betätigen das mindestens eine Spreizmittel in etwa axialer Richtung, also der Einsteckrichtung des Steckers, oder zumindest mit einer Richtungskomponente die der Einsteckrichtung entspricht (Verschiebungskomponente), von einer Freigabeposition (Ruheposition) in eine verrastbare Spreizposition.

Auf diese Weise wird es möglich, mit einer vom Kraftaufwand der bedienenden Person unabhängigen Klemmkraft den Zigarettenanzünderstecker in der Steckdose festzuklemmen und damit die sicherheitstechnischen Vorraussetzungen zu schaffen, die es ermöglichen, vergleichsweise leistungsstarke Verbraucher aus der Steckdose im Kraftfahrzeug mit stabiler elektrischer Spannung zu versorgen, ohne dass unzuträgliche Erwärmungen durch Übergangsspannungen auftreten.

Um bei einer an sich gewünschten vollständigen Einhandbenutzung des Zigarettenanzündersteckers, die potenziellen Quer- und/ Längskräfte auf die Steckverbindung und die Klemmmittel zu minimieren, kann ein Abstützmittel an dem außerhalb der Steckdose gelegenen Gehäuseteil des Zigarettenanzündersteckers vorgesehen sein, das dem Drucktaster gegenüberliegt. Auf diese Weise ist es möglich, mit einem Finger der Bedienhand des Benutzers, insbesondere seinem Daumen, den Drucktaster zu betätigen und mit einem oder zwei weiteren Fingern derselben Hand eine der auf den Taster wirkenden Druckkraft entgegen gerichtete Reaktionskraft auf den Zigarettenanzünderstecker einwirken zu lassen. Insbesondere kann das Abstützmittel zweiteilig sein, sodass zum Beispiel Zeige- und Mittelfinger der Bedienhand den Zigarettenanzünderstecker an den Teilabstützflächen hintergreifen, während der Daumen den Drucktaster betätigt. Die aufgebrachten Kräfte heben sich gegenseitig auf. Ebenso kann die am Drucktaster zum Beispiel mit dem Daumen aufgewendete Kraft mit dem Zeigefinder an einer gegenüberliegenden Abstützfläche des Gehäuseteils abgefangen werden.

Um beim Anbringungsort und der Bauart des Drucktasters eine möglichst große Gestaltungsfreiheit zu gewährleisten, kann ein vom Drucktaster eigenständiges Kopplungsteil zu Übertragung der Schubbewegung des Drucktasters und zum Verschieben des Spreizmittels vorgesehen sein. Insbesondere kann ein Verrasten bei Erreichen der Spreizposition an dem Kupplungsteil vorgesehen sein. Derartige Kopplungsteile für verrastbare Drucktaster sind dem Fachmann sowohl vom Drucktastern für elektrische Stromkreise als auch für andere Alltagsanwendungen, wie Kugelschreibern, bekannt. Im Übrigen können "Drucktaster" im Sinne der Erfindung auch als Schieber, Schwenkhebel, Drehgriff oder dergleichen ausgeführt sein.

Um einem raschen Verschleiß der Klemmmittel entgegen zu wirken und/oder mit minimalen Kraftaufwand maximale Klemmkräfte hervorzubringen, können die Klemmbacken derart von Spreizmittel eigenständig sein, dass das Spreizmittel von der Rückseite der Klemmbacken auf diese einwirkt und die Klemmbacken bezüglich der Kontaktierhülse des Zigarettenanzündersteckers axial unverschieblich ist. Dadurch werden jegliche Reibkräfte zwischen der Klemmbacke und der Klemmstelle, an der sie auf die Kontaktbuchse der Steckdose einwirken, vermieden.

Eine gegen besonders Verschleiß besonders unempfindliche Spreizung der Klemmbacken wird dadurch erreicht, dass die mindestens eine Klemmbacke im freien Endbereich eines Federarmes angeordnet ist und der Federarm mit der Kontaktierhülse des Zigarettenanzündersteckers fest verbunden ist. Die Federkräfte des Federarmes halten die Klemmbacken beim Einschieben des Zigarettenanzündersteckers in die Steckdose in einer zurückgezogenen Position. Nach vollständigem Einschieben in die Steckdose und Betätigen des Drucktasters werden die Federarme durch das Spreizmittel nach radial außen gedrängt. Bevorzugt greift das Spreizmittel an einer zwischen den Klemmbacken und dem Befestigungsende des Federarmes gelegen Position an dem Federarm an. Dadurch werden die Spreizkräfte beliebig nahe der Axialposition der Klemmbacken auf den Federarm und damit auf die Klemmbacke ausgeübt. Dennoch verbleibt im Längenbereich der Klemmbacken eine ausreichende Rest-Federelastizität, die verhindert, dass bei relativ schmal ausgebildeten Kontaktbuchsen zu hohe Spreizkräfte auf die Kontaktbuchse ausgeübt werden. Die Innenabmessungen einer großen Mehrzahl von am Markt befindlichen Steckdosen für den Kraftfahrzeugbereich schwanken trotz einer grundsätzlichen Normierung der Kontaktbuchsen in einer Größenordnung von bis zu zwei Millimetern. Solche Weitenunterschiede die Hersteller-typisch oder Toleranz-bedingt sein können, werden von dem erfindungsgemäßen Zigarettenanzünderstecker grundsätzlich toleriert, ohne dass die Festigkeit des Sitzes des Zigarettenanzündersteckers in Klemmposition und/ oder die elektrische Kontaktierung bei höheren Stromstärken problematisch wird. Typischer Weise greift das Spreizmittel zwischen der Mitte und den letzten 10% der Federarmlänge an dem Federarm an.

Um Verschleißerscheinungen der Klemmmittel zu vermindern und die Klemmkräfte optimal auf die Kontaktbuchse der Steckdose zu verteilen, können die Klemmbacken mit elastischen Greifmitteln versehen sein, zum Beispiel kann ein gummielastischer Belag, der auch Rippen tragen kann, vorgesehen sein. Wenn die Klemmbacken im Endbereich eines Federarmes vorgesehen sind, sind die Greifmittel an den entsprechenden Stellen auf der Außenseite der Federarme vorgesehen, also im Kontaktbereich zur Kontaktbuchse der Steckdose. Bei den Greifmitteln kann es sich um an die Federarme angespritzte Bauteile geeigneter Formgebung und Materialauswahl handeln. Bei Federarmen aus Kunststoffmaterial können die Greifmittel sowohl aus demselben Kunststoffmaterial wie die Federarme, aber auch aus einem Material mit einem anderen Elastizitätsmodul als die Materialien des übrigen Federarmes bestehen.

Das Spreizmittel kann aus seiner Verrastungsposition in die ungespreizte Ruheposition der Klemmbacken auf verschiedene Weise zurückgeführt werden. Eine Möglichkeit besteht darin, den Drucktaster auch als Zugschalter auszubilden, so dass durch Hintergreifen an Zugflächen und Zurückziehen des Drucktasters die Rastkräfte der Spreizmittel überwunden werden: Die Rückholmittel zum Zurückbewegen des Spreizmittels aus seiner Verrastungsposition in eine ungespreizte Ruheposition können auch in einem Reversiermechanismus bestehen, wie er bei Drucktastern an sich bekannt ist. Hierbei wird ein erneuter Druck auf den Drucktaster ausgeübt, wobei sich die Verrastung löst und geeignete Federmittel den Drucktaster samt dem Spreizmittel in die ungespreizte Ruheposition zurück überführen. Hierdurch wird das Beenden des verspreizten Zustandes des Zigarettenanzündersteckers besonders einfach ohne wesentliche Quer- oder Längskräfte auf dem Zigarettenanzünderstecker möglich.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - ein bevorzugtes Ausführungsbeispiel einer erfindungsgemäßen Steckvorrichtung nach Art eines Zigarettenanzündersteckers, insbesondere für Kraftfahrzeuge, dargestellt ist.

### FIGURENKURZBESCHREIBUNG

In der Zeichnung zeigen:
Fig.1A einen Zigarettenanzünderstecker in perspektivischer Außenansicht;
Fig.1B denselben Zigarettenanzünderstecker in einer Seitenansicht - Ansicht A gemäß Fig.1A;
Fig.2 A/B von demselben Zigarettenanzünder eine perspektivische Innenansicht, bei entferntem linkem Gehäuseteil und ohne Gehäuse (Fig. 2B) sowie
Fig.3 denselben Zigarettenanzünderstecker in perspektivischer Explosionsdarstellung.

### DETAILLIERTE BESCHREIBUNG EINES AUSFÜHRUNGSBEISPIELES

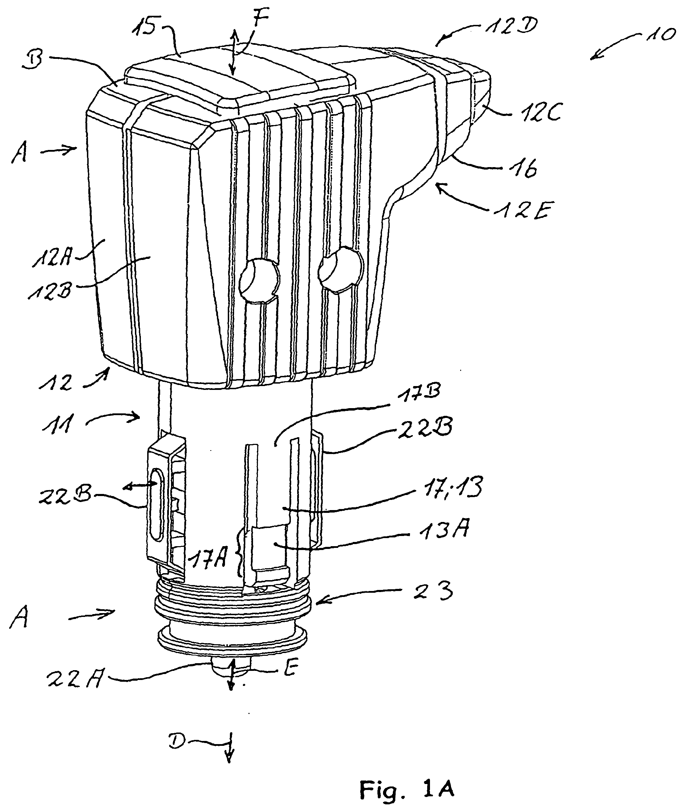

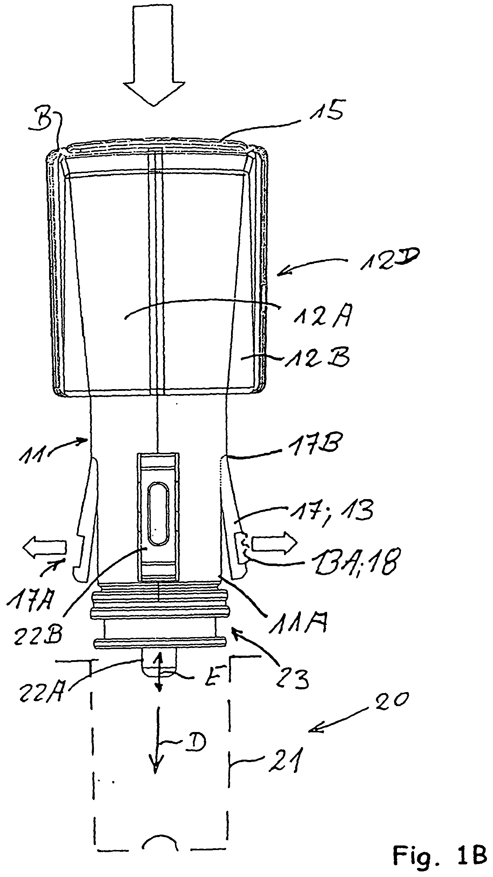

Wie aus Figuren 1A und1B ersichtlich, weist die insgesamt mit 10 bezeichnet Steckvorrichtung - hier nach Art eines Zigarettenanzündersteckers - ein aus zwei komplementären Gehäuseteilen 12A und 12B bestehendes Gehäuse 12 auf. Dieses ist etwa in der Symmetrieebene in eine rechte und linke Hälfte geteilt und im Gebrauchszustand sind die beiden Gehäuseteile fest miteinander verschraubt. Die Steckvorrichtung 10 weist einen vorderen, als Kontaktierhülse 11 dienenden Teil auf, der in eine in Figur 1B angedeutete Kontaktbuchse 21 einer elektrischen Steckdose 20 einschiebbar ist. Der übrige stets außerhalb der Steckdose gelegene Gehäuseteil dient als Handhabe zum Einschieben der Steckvorrichtung in die Steckdose und zu deren Herausziehen sowie zum nach außen Führen eines Stromkabels im Bereich einer Kabeldurchführtülle 12C.

Die Kontaktierhülse 11 weist zwei einander gegenüberliegende und sich in Steckrichtung D erstreckende längliche Gehäusewandaussparungen 11A auf. Diese Aussparungen werden großenteils von einem Federarm 17 ausgefüllt, der an seinem steckkopfseitigen Ende mit dem Gehäuseteil 12A respektive 12B, dem die Aussparung 11A zugeordnet ist, einstückig verbunden ist. Das betreffende Gehäuseteil, insbesondere die entsprechende Hälfte der Kontaktierhülse ist in dem dargestellten und in soweit bevorzugten Ausführungsbeispiel einstückig mit dem Federarm 17, zum Beispiel durch Spritzgießen hergestellt. Die Außenkontur jedes Federarms 17 ergänzt etwa die von der Aussparung 11A ausgesparte Kontur der Kontaktierhülse 11. Die Federarme 17 sind derart in der zugehörigen Aussparung 11A angeordnet, dass - außer an ihrem Befestigungsende 17B - an den übrigen Seitenrändern der Federarme freie Spalte verbleiben, die miteinander verbunden sind, so dass ein in Seitenansicht etwa U-förmiger Spalt mehr oder minder gleich bleibender Breite entsteht. Demzufolge entspricht die Form der Federarme in Seitenansicht im Wesentlichen der lang gestreckten Form der Aussparung 11A, in der sich der Federarm erstreckt.

Die Federarme 17 stellen Klemmmittel 13 im Sinne der Erfindung dar, denn Sie können -aus an Ihrem Befestigungsende 17B nach radial außen über die Außenkontur der Kontaktierhülse 11 hinaus verlagert werden, wie dies in Figur 1 B durch die zur Seite hingerichteten Pfeile D dargestellt ist. Über 1B befinden sich die Klemmmittel 13 etwa in ihrer maximalen Spreizlage während Figur 1A die Klemmmittel 13 in ungespreizter Ruhelage zeigt.

Die Klemmmittel 13 weisen Klemmbacken 13A auf, welche sich im freien Endbereich 17A der Federarme 17 befinden und der mechanischen Kontaktierung mit der Kontaktbuchse 21 einer Steckdose 20 dienen. Um einen besonders sicheren Halt zwischen den Klemmmitteln 13 und der inneren Gehäusewand der Kontaktbuchse 21 zu ermöglichen, können die Klemmbacken 13A mit Greifmitteln 18 ausgestattet sein, wie sie in Figur 1B bei der rechten Klemmbacke 13A gestrichelt dargestellt sind. Die Greifmittel können aus einem anderen Material als die Klemmbacken hergestellt sein und durch ihre Materialauswahl und/oder Außenkontur für einen besonderes sicheren Sitz in der Kontaktbuchse 21 ausgestattet sein. So kann ihre Oberfläche einen abgestimmten Rauheitsgrad oder eine profitierte, z.B. lippenartige Außenkontur aufweisen und/oder das Material einen geringeren Elastizitätsmodus als das Klemmmittel 13 aufweisen, um sich federelastisch nachgiebig an die Gehäuse-innenwand der Kontaktbuchse 21 anlegen zu können.

Die Kontaktierhülse 11 weist im übrigen zwei beidseitig in der Gehäuseteilungsebene gelegene Wandaussparungen auf, die von elektrischen Kontaktmitteln 22B derart durchdrungen werden, dass eine elastisch federnde Anlage zwischen den metallische Kontaktflächen aufweisenden Kontaktmitteln und elektrisch leitenden Flächenbereichen an der Innenwand der Kontaktbuchse 21 erreicht wird. Diese Kontaktmittel füllen die Durchbrechungen der Kontaktierhülse im Wesentlichen aus und sind über eine ausreichend große Wegstrecke in an sich bekannter Weise federelastisch nach radial innen eindrückbar. Figur 1A zeigt in soweit den federelastisch nach außen gespreizten Ruhezustand der Kontaktmittel und 22B. In Steckrichtung D voran nach außen vorstehend weist die Kontaktierhülse 11 in der Mitte ihrer Stirnseite einen weiteren Kontakt 22A bekannter Bauart auf, der am Grunde der Kontaktbuchse 21 sich elektrisch leitend an einen zweiten elektrischen Pol der Steckdose 20 anlegt und in Richtung des Bewegungspfeils E federelastisch in die Steckvorrichtung teilweise hineinverlagern lässt. In den Zeichnungen befindet sich das Kontaktmittel 22A jeweils in der nach außen elastisch vorgeschobenen Ruhelage. Ein das Kontaktmittel 22B ringförmiges umgebendes Greifelement 23 dient in an sich bekannter Weise dazu, bei bestimmten Typen von Steckdosen 20 eine Einsteckendposition zu definieren und die Steckvorrichtung im Zusammenwirken mit federelastischen Mitteln der Steckdose 20 zu halten.

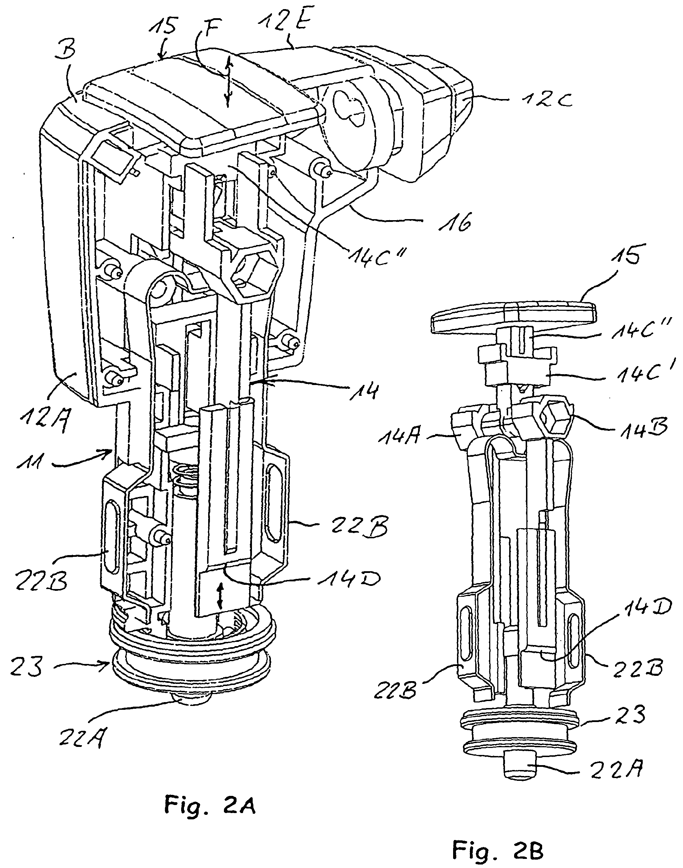

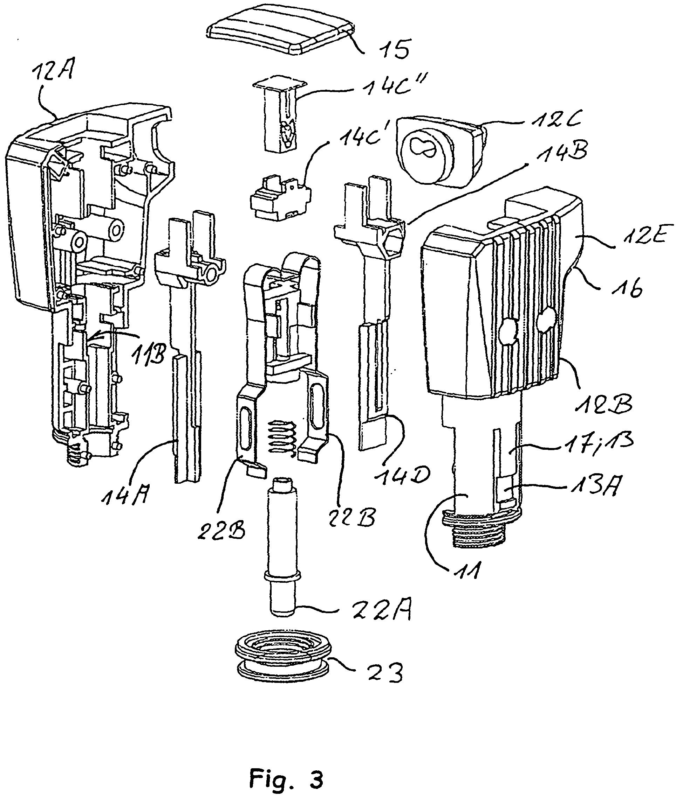

Der stets außerhalb der Steckdose 20 gelegene Steckkopf 12D des Gehäuses 12 ist an seinem rückwärtigem Ende in dem dargestellten und in soweit bevorzugtem Ausführungsbeispiel mit einem seitlichen Vorsprung 12E versehen an dessen nach außen weisendem Ende sich die Kabeldurchführtülle 12C befindet und der die Funktion eines Abstützmittels 16 aufweist, die es der Bedienhand des Benutzers erleichtert, die Steckvorrichtung insgesamt aus der Steckdose 20 herauszuziehen, aber auch dazu dient, das einhändige Bedienen eines Drucktasters 15 zu erleichtern, der sich an der rückwärtigen Stirnwand des Steckkopfes 12D befindet. Dieser Drucktaster 15 ist in Richtung des Bewegungspfeils F, d.h. in dem dargestellten und in soweit bevorzugtem Ausführungsbeispiel etwa parallel zur Steckrichtung D verlagerbar, um die Klemmbacken 13 aus ihrer in Figur 1A gezeigten ungespreizten Ruhelage in die in Figur 1B gezeigte maximale Spreizlage zu verlagern. Dies wird durch einen einmaligen Druck auf den Drucktaster 15 erreicht, der in der eingedrückten, aus Figur 1B sich ergebenden Lage automatisch verrastet. Ein zweiter Druck in dieselbe Richtung gibt die Verrastung wieder frei, so dass sich die Klemmmittel 13 wieder nach radial innen und der Drucktaster 15 sich nach außen in seine Ruhelage zurückverlagert. Weitere Einzelheiten sowie die Funktion der Steckvorrichtung werden aus der nachfolgenden Beschreibung der Figuren 2 und 3 verständlich.

Figur 2 A/B zeigt zunächst, dass das Gehäuseteil 12A außer über Gehäuseverbindungsschrauben auch über an sich bekannte Führungsnocken im Bereich der Gehäuseteilungsebene und entsprechenden Führungshülsen des gegenüberliegenden Gehäuseteils 12B mit diesem positionsgenau in bekannter Weise verbinden lässt. Die Kontaktmittel 22A und 22B sind in grundsätzlich bekannter Weise als runder, federelastisch abgestützter Kontaktstift (Kontaktmittel 22A) respektive als gestanzter und gefalteter Metallstreifen (Kontaktmittel 22B) ausgeführt und in bekannter Weise innerhalb des Gehäuses 12A,12B gelagert sowie elektrisch leitend mit einem nicht dargestellten Kabel verbunden.

Für die Betätigung der Klemmmittel 13 sind im Gehäuseinneren Spreizmittel 14 vorgesehen. Diese sind zweigeteilt und bestehen aus je einem Schubarm 14A und 14B, wie besonders deutlich aus Figur 3 ersichtlich. Diese erstrecken sich in dem dargestellten und insoweit bevorzugten Ausführungsbeispiel in etwa parallel zur Steckrichtung D und sind an ihrem rückwärtigen Endbereich z.B. mit einer quer zur ihrer Längserstreckung verlaufenden Schraube miteinander verbindbar. Sie sind je einem der beiden Gehäuseteile 12A bzw. 12B zugeordnet und dort in geeigneten Führungen, vorzugsweise schiebbar, in Richtung des Bewegungspfeils F mittels des Drucktasters 17 schiebbar verlagert. Hierzu dienen Schiebeführungen 11 B im Inneren der Kontaktierhülse 11. Auf ihrer radialen Außenseite weisen die Schubarme 14A,14B eine Stufung 14D auf, welche mit der Rückseite des mit dem Gehäuseteil fest verbundenen Federarms 17 im Bereich der Rückseite der Klemmbacke 13A in Berührungskontakt steht. Wird nun der Schubarm 14A,14B über den Drucktaster 15 in Steckrichtung vorgeschoben, so bewirken die Stufungen 14D das nach außen Spreizen der Federarme 17. Hierbei verhindern die Schiebeführungen 11 B ein elastisches nach innen Verlagern der Schubarme 14A,14B.

An dem der Stufung 14D gegenüberliegenden Ende sind die Spreizmittel 14 über ein, ggf. mehrteiliges, Kopplungsteil 14C mit dem Drucktaster 15 in der Weise verbunden, dass die Spreizmittel 14 in ihrer Spreizposition rastend gehalten werden und bei erneutem Druck auf dem Drucktaster 15 durch eine nicht dargestellte Rückholfeder in eine Ruhelage zurückgeholt werden. Zu diesem Zweck weist das Kopplungsteil 14C ein gehäusefestes Teil 14C' und ein tasterfestes Teil 14C" auf, welches durch das gehäusefeste Teil 14C' hindurch erstreckt ist und mit den Schubarmen 14A/14B in deren Verbindungsbereich druck- und zugfest verbunden ist, sowie einen z. B von Schreibstiften bekannten Rastmechanismus. Eine in der Zeichnung der Übersichtlichkeit halber fortgelassene Druckfeder dient als Rückholmittel 19 und stützt sich einerseits bezüglich des gehäusefesten Teils 14C' und andererseits bezüglich des tasterfesten Teils 14C" bzw. an dem Drucktaster 15 ab. Letzterer ist vorzugsweise mit dem tasterfesten Teil 14C" fest, insbesondere einteilig verbunden.

Durch eine um 90 Grad versetzte Anordnung der Federarme 17 und der parallel zu diesen im Gehäuseinneren angeordneten Schubarmen 14A,14B bezüglich der Kontaktmittel 22B sowie durch die zweiarmige Ausführung der Schubarme 14A,14B wird jegliche Behinderung zwischen der Verspreizeinrichtung 13,14,15,17 einerseits und der elektrischen Kontaktierung 22A? 22B andererseits vermieden. Die Schubarme sparen die elektrischen Kontaktierungsmittel zwischen sich aus und ihr Antrieb erfolgt im rückwärtigen Teil des Steckkopfes 12D des Gehäuses 12.

**BEZUGSZEICHENLISTE**

| | | | |
|---|---|---|---|
| 10 | Steckvorrichtung | 16 | Abstützmittel |
| 11 | Kontaktierhülse | 17 | Federarm |
| 11A | Gehäusewand-Aussparung | 17A | freier Endbereich |
| 11B | Schiebeführung | 17B | Befestigungsende |
| 12 | Gehäuse | 18 | Greifmittel |
| 12A | Gehäuseteil | 19 | Rückholmittel |
| 12B | Gehäuseteil | 20 | Steckdose |
| 12C | Kabeldurchführtülle | 21 | Kontaktbuchse |
| 12D | Steckkopf | 22A | Kontaktmittel |
| 12E | Vorsprung | 22B | Kontaktmittel |
| 13 | Klemmmittel | 23 | Greifelement |
| 13A | Klemmbacke | A | Ansicht |
| 14 | Spreizmittel | B | Gehäusrückseite |
| 14A | Schubarm | C | Bewegungspfeil |
| 14B | Schubarm | D | Steckrichtung |
| 14C | Kopplungsteil | E | Bewegungspfeil |
| 14C' | gehäusefestes Teil | F | Bewegungspfeil |
| 14C" | tasterfestes Teil | R | Ruheposition |
| 14D | Stufung | S | Spreizposition |
| 15 | Drucktaster | | |

## Patentansprüche

1. Steckvorrichtung (10) nach Art eines Zigarettenanzündersteckers, insbesonere für Kraftfahrzeuge, für den elektrischen Anschluss an eine Niedervolt-Steckdose (20),
mit einem außerhalb der Steckdose (20) gelegenen Gehäuseteil (12,12A,12B),
mit einer in eine Kontaktbuchse (21) der Steckdose (20) einführbaren Kontaktierhülse (11), mit einem durch Wandaussparungen hindurch im Ruhezustand seitlich nach Außen federelastisch gespreizten elektrischen Kontaktmittel (22A, 22B),
mit mindestens einem in mindestens einer weiteren Gehäusewand-Aussparung (11A) der Kontaktierhülse angeordneten, mindestens eine Klemmbacke (13A) aufweisenden eigenständigen, der mechanischen Kontaktierung zum sicheren Halt an der Steckdose dienenden Klemmmittel (13) zum mechanischen Festsetzen der Steckvorrichtung (10) nach deren Einführen in die Steckdose (20),
mit mindestens einem Spreizmittel (14) zum nach außen Spreizen der mindestens einen Klemmbacke (13A) bezüglich der Kontaktierhülse (11) und mit Mitteln zum Verschieben des mindestens einen Spreizmittels (14), wobei eine Richtungskomponente bei dem Verschieben parallel zu der Einsteckrichtung der Steckervorrichtung (10) beim Einführen in die Steckdose verläuft,
**dadurch gekennzeichnet,**
**dass** die Mittel zum Verschieben des mindestens einen Spreizmittels (14) einen an dem außerhalb der Steckdose gelegenen Gehäuseteil (12,12A,12B) angeordneten Drucktaster (15) umfassen und derart gebildet sind, dass das Verschieben des mindestens einen Spreizmittels (14) aus einer die eigenständigen Klemmbacken (13A) freigebenden Ruheposition (R) in eine verrastbare Spreizposition (S) der mindestens einen Klemmbacke (13A) erfolgt.

2. Steckvorrichtung nach Anspruch 1, **dadurch gekennzeichnet, dass** der Drucktaster (15) auf der der Kontaktierhülse (11) gegenüberliegenden Rückseite (B), des Gehäuses (12) und in Steckrichtung (D) wirkend angeordnet ist.

3. Steckvorrichtung nach Anspruch 1 oder 2 **gekennzeichnet durch** mindestens ein an dem Gehäuseteil (12; 12A, 12B) vorgesehenes, dem Drucktaster (15) gegenüberliegendes Abstützmittel (16) zur Einhandbedienung des Drucktasters (15) ohne wesentliche Reaktionskräfte auf die Kontaktierhülse (11).

4. Steckvorrichtung nach einem der Ansprüche 1 bis 3, **gekennzeichnet durch** mindestens ein von dem Drucktaster (15) eigenständiges Kopplungsteil (14C) zur Übertragung der Schubbewegung des Drucktasters (15) und zum Verschieben des Spreizmittels (14).

5. Steckvorrichtung nach einem der Ansprüche 1 bis 4 **dadurch gekennzeichnet, dass** das mindestens eine Spreizmittel (14) auf die mindestens eine Klemmbacke (13A) von deren Rückseite her einwirkt und die mindestens eine Klemmbacke (13A) von dem Spreizmittel (14) eigenständig und gegenüber der Kontaktierhülse (11) axial unverschieblich ist.

6. Steckvorrichtung nach einem der Ansprüche 1 bis 5, **dadurch gekennzeichnet, dass** das mindestens eine Spreizmittel (14) in einer Schiebeführung (11 B) der Kontaktierhülse (11) geführt ist.

7. Steckvorrichtung nach einem der Ansprüche 1 bis 6 **dadurch gekennzeichnet, dass** das mindestens eine Spreizmittel (14) miteinander verbundene und paarweise mit seitlichem Abstand voneinander angeordnete Schubarme (14A, 14B) aufweist.

8. Steckvorrichtung nach einem der Ansprüche 1 bis 7 **dadurch gekennzeichnet, dass** die mindestens eine Klemmbacke (13A) im freien Endbereich (17A) eines Federarmes (17) angeordnet ist und der Federarm (17) mit der Kontaktierhülse (11) fest verbunden ist.

9. Steckvorrichtung nach Anspruch 8, **dadurch gekennzeichnet, dass** das mindestens eine Spreizmittel (14) auf einer zwischen der mindestens einen Klemmbacke (13A) und dem Befestigungsende (17B) des Federarmes (17) gelegenen Position an dem Federarm (17) spreizend angreift.

10. Streckvorrichtung nach einem der Ansprüche 1 bis 9 **dadurch gekennzeichnet, dass** die mindestens eine Klemmbacke (13A) mit mindestens ei nem elastischen Greifmittel (18) versehen ist.

11. Streckvorrichtung nach einem der Ansprüche 1 bis 10 **gekennzeichnet durch** Rückholmittel (19) zum Zurückbewegen des Spreizmittels (14) aus seiner verrasteten Spreizposition (S) in eine ungespreizte Ruheposition (R).

## Claims

1. Plug device (10) of the type of a cigarette lighter plug, in particular for motor vehicles, for electrical connection to a low-voltage socket (20), with a casing part (12, 12A, 12B) located outside the socket (20), with a contacting sleeve (11) insertable into a contact bushing (21) of the socket (20), with an electrical contact means (22A, 22B) that is spread springelastically laterally outwards through wall recesses in the resting state, with at least one independent clamping means (13) arranged in at least one other casing wall recess (11A) of the contacting sleeve, having at least one clamp jaw (13A) and serving for mechanical contacting for a secure hold on the socket to fix the plug device (10) mechanically following its introduction into the socket (20), with at least one spreading means (14) for spreading the at least one clamp jaw (13A) outwards with reference to the contacting sleeve (11) and with means for moving the at least one spreading means (14), wherein a directional component runs in the movement parallel to the insertion direction of the plug device (10) upon introduction into the socket, **characterised by** that the means for moving the at least one spreading means (14) comprise a push button (15) arranged on the casing part (12, 12A, 12B) located outside the socket and are formed in such a way that the movement of the at least one spreading means (14) takes place from a resting position (R) releasing the independent clamp jaws (13A) into a lockable spreading position (S) of the at least one clamp jaw (13A).

2. Plug device according to claim 1, **characterised by** that the push button (15) is arranged on the back (B) of the casing (12) opposite the contacting sleeve (11) and acting in the plug direction (D).

3. Plug device according to claim 1 or 2, **characterised by** at least one support means (16) provided on the casing part (12; 12A, 12B) opposite the push button (15) for single-handed operation of the push button (15) without substantial reaction forces onto the contacting sleeve (11).

4. Plug device according to one of claims 1 to 3, **characterised by** at least one coupling part (14C) independent of the push button (15) for transmitting the thrust movement of the push button (15) and for moving the spreading means (14).

5. Plug device according to one of claims 1 to 4, **characterised by** that the at least one spreading means (14) acts on the at least one clamp jaw (13A) from its rear side and the at least one clamp jaw (13A) is independent of the spreading means (14) and axially immovable relative to the contacting sleeve (11).

6. Plug device according to one of claims 1 to 5, **characterised by** that the at least one spreading means (14) is carried in a sliding guide (11 B) of the contacting sleeve (11).

7. Plug device according to one of claims 1 to 6, **characterised by** that the at least one spreading means (14) has thrust arms (14A, 14B) that are connected to one another and arranged pairwise at a lateral distance from one another.

8. Plug device according to one of claims 1 to 7, **characterised by** that the at least one clamp jaw (13A) is arranged in the free end region (17A) of a spring arm (17) and the spring arm (17) is fixedly connected to the contacting sleeve (11).

9. Plug device according to claim 8, **characterised by** that the at least one spreading means (14) engages in a spreading manner on the spring arm (17) at a position located between the at least one clamp jaw (13A) and the attachment end (17B) of the spring arm (17).

10. Plug device according to one of claims 1 to 9, **characterised by** that the at least one clamp jaw (13A) is provided with at least one elastic gripping means (18).

11. Plug device according to one of claims 1 to 10, **characterised by** return means (19) to move the spreading means (14) back from its locked spreading position (S) into an unspread resting position (R).

## Revendications

1. Dispositif enfichable (10) sous forme d'une fiche d'allume-cigare, notamment pour véhicules automobiles, destiné à être raccordé électriquement à une prise (20) à basse tension, et comportant
une partie de boîtier (12, 12A, 12B) située à l'extérieur de la prise (20), une douille de contact (11) pouvant être introduite dans un connecteur femelle (21) de la prise (20) et présentant un moyen de contact électrique (22A, 22B) qui, à l'état de repos, est déployé latéralement vers l'extérieur de manière élastique à travers des évidements réalisés dans les parois,
au moins un moyen de blocage (13) autonome, disposé dans au moins un autre évidemment (11A) de la douille de contact réalisé dans la paroi du boîtier, et présentant au moins une mâchoire de blocage (13A), ledit moyen de blocage étant destiné à effectuer un contact mécanique permettant une tenue sûre dans la prise afin d'assurer la fixation mécanique du dispositif enfichable (10) introduit dans la prise (20),
au moins un moyen de déploiement (14) destiné à déployer vers l'extérieur l'au moins une mâchoire de blocage (13A) par rapport à la douille de contact (11), et des moyens de déplacement de l'au moins un moyen de déploiement (14), une composante de direction présente lors dudit déplacement étant orientée parallèle au sens d'enfichage du dispositif enfichable (10) lors de l'introduction de la prise, **caractérisé en ce que**
les moyens de déplacement de l'au moins un moyen de déploiement (14) comprennent un bouton-poussoir (15) disposé sur la partie de boîtier (12, 12A, 12B) extérieure à la prise et sont conçus de manière que le déplacement de l'au moins un moyen de déploiement (14) se produise en passant d'une position de repos (R) libérant les mâchoires de blocage (13A) autonomes à une position de déploiement (S) verrouillable de l'au moins une mâchoire de blocage (13A).

2. Dispositif enfichable selon la revendication 1, **caractérisé en ce que** le bouton-poussoir (15) est disposé sur le revers (B) du boîtier (12) qui est opposé à la douille de contact (11) en étant fonctionnel dans le sens de l'enfichage (D).

3. Dispositif enfichable selon la revendication 1 ou 2, **caractérisé par** au moins un moyen d'appui (16) disposé sur la partie de boîtier (12 ; 12A, 12B) en étant opposé au bouton-poussoir (15) pour permettre le maniement du bouton-poussoir (15) d'une seule main, sans exercer de force de réaction sensible sur la douille de contact (11).

4. Dispositif enfichable selon l'une quelconque des revendications 1 à 3, **caractérisé par** au moins une partie de couplage (14C) autonome vis-à-vis du bouton-poussoir (15), destinée à transmettre le mouvement de poussée exercé sur le bouton-poussoir (15) et à déplacer le moyen de déploiement (14).

5. Dispositif enfichable selon l'une quelconque des revendications 1 à 4 **caractérisé en ce que** l'au moins un moyen de déploiement (14) agit sur l'au moins une mâchoire de blocage (13A) par l'arrière de celle-ci et **en ce que** l'au moins une mâchoire de blocage (13A) est autonome vis-à-vis du moyen de déploiement (14) et ne peut pas être déplacée axialement par rapport à la douille de contact (11).

6. Dispositif enfichable selon l'une quelconque des revendications 1 à 5, **caractérisé en ce que** l'au moins un moyen de déploiement (14) est guidé dans un guidage de poussée (11 B) de la douille de contact (11).

7. Dispositif enfichable selon l'une quelconque des revendications 1 à 6, **caractérisé en ce que** l'au moins un moyen de déploiement (14) présente des bras de poussée (14A, 14B) reliés entre eux et disposés par paire avec un écartement latéral entre eux.

8. Dispositif enfichable selon l'une quelconque des revendications 1 à 7, **caractérisé en ce que** l'au moins une mâchoire de blocage (13A) est disposée dans la zone terminale libre (17A) d'un bras-ressort (17), lequel bras-ressort (17) est solidaire de la douille de contact (11).

9. Dispositif enfichable selon la revendication 8, **caractérisé en ce que** l'au moins un moyen de déploiement (14) a une action de déploiement sur le bras-ressort (17) en une position située entre l'au moins une mâchoire de blocage (13A) et l'extrémité de fixation (17B) du bras-ressort (17).

10. Dispositif enfichable selon l'une quelconque des revendications 1 à 9, **caractérisé en ce que** l'au moins une mâchoire de blocage (13A) est pourvue d'au moins un moyen de prise (18) élastique.

11. Dispositif enfichable selon l'une quelconque des revendications 1 à 10, **caractérisé par** des moyens de rappel (19) destinés à ramener le moyen de déploiement (14) de sa position de déploiement (S) verrouillée à une position de repos (R) non déployée.
